# EUROPEAN PATENT APPLICATION

(11) **EP 3 369 679 A1**
(43) Date of publication of application: **05.09.2018**
(21) Application number: 18159170.2
(22) Date of filing: 28.02.2018
(51) Int. Cl.: B65D 90/08, F16B 12/14

(54) **FRAME STRUCTURE, METHOD OF ASSEMBLING**

(30) Priority: 02.03.2017 SE 1750225
(71) Applicant: Envirotainer Engineering AB, 194 61 Upplands Väsby (SE)
(72) Inventor: SKÖLD, Thomas, 194 57 Upplands Väsby (SE); EGERTZ, David, 121 30 Enskededalen (SE); FLADVAD, Johan, 112 55 STOCKHOLM (SE); BLOMFELDT, Johannes, 754 71 Uppsala (SE)
(74) Representative: Aros Patent AB

(57) **Abstract**

A frame structure for a container or box (1) comprising panels (3) comprises frame bars (20) with flanges (22) that overlap with the panels, a corner piece (10, 10') at each corner of the container and bolts (40) connecting the corner pieces to the ends of the frame bars, each corner piece comprising sections (11) extending in planes that are angled to each other, each section positioned flush with a respective end of a respective frame bar and being provided with a through-hole (12), each bolt being arranged through a respective through-hole, perpendicularly to a plane of a respective section, in a longitudinal direction along a respective frame bar and into a respective hole (26) provided in and facing an end of the frame bar, and fastened in a hole (52) of a respective cross-dowel (50) located in a respective seat (30) provided in the interior of the respective frame bar, each cross-dowel having a cylindrical shape and being provided with a groove (51) in at least one end, the hole of the cross-dowel being aligned with the hole facing an end of the respective frame bar.

## Description

### TECHNICAL FIELD

The proposed technology generally relates to containers and similar constructions, and more specifically to a frame structure for a container or similar, comprising panels, such as wall panels and/or floor panels and/or roof panels.

### BACKGROUND

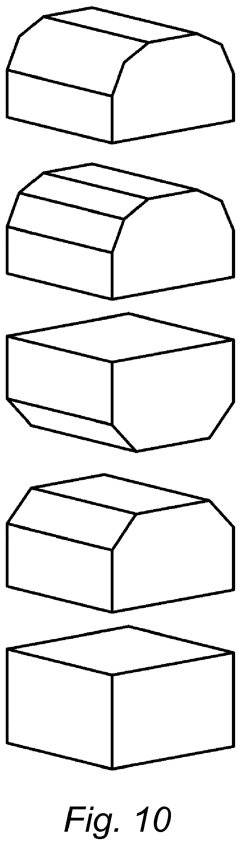

A unit load device (ULD) is a pallet or container used to load e.g. luggage, freight, and mail on aircraft and is standardized according to regulations from the International Air Transport Association (IATA). Some examples of shapes of standard ULD containers are shown in Fig. 10. It allows a large quantity of cargo to be bundled into a single unit. Since this leads to fewer units to load, it saves ground crews' time and effort and helps prevent delayed flights. Most ULD containers, also known as cans and pods, are closed containers comprising wall, roof and floor panels of e.g. composite material such as glass fiber, polyurethane, polycarbonate and/or other similar materials, riveted or screwed to a frame comprising bars/profiles of metal such as e.g. aluminum. The bars/profiles are usually attached to the panels by means of a large number of screws or rivets along the entire length of the profiles. Assembling such containers is a time-consuming process due the large number of holes to be drilled and screws to be fitted in the bars/profiles. Also, it is not feasible to provide the bars/profiles with pre-drilled holes to facilitate assembly, since the size and shape of the walls may differ slightly due to the manufacturing process. There is therefore a general need for an easier and quicker way to assemble and disassemble such containers.

### SUMMARY

It is an object to provide a frame structure that facilitates assembling of containers, boxes and similar constructions, partly or completely enclosed, and comprising panels, for example containers for transporting air cargo. This and other objects are met by embodiments of the proposed technology.

An aspect of the embodiments relates to a frame structure for a container or box, where the container or box comprises panels. The frame structure comprises at least two frame bars positioned at angles to each other to form at least one corner, each frame bar having a cross-sectional shape comprising at least one flange extending along a longitudinal edge of the frame bar. The framework structure further comprises at least two cross-dowels arranged in a respective seat provided in an interior of a respective frame bar, at least one opening being provided in the frame bar and facing towards a side surface of the frame bar and leading to a respective seat, each cross-dowel having a cylindrical shape and being provided with a groove in at least one end and a hole in a lateral surface of the cross-dowel, the hole of the cross-dowel being aligned with a hole provided in the respective frame bar, the hole in the frame bar facing towards an end of the frame bar. The framework structure further comprises at least one corner piece, each corner piece comprising at least two sections being connected to or integral with each other and extending in planes that are angled to each other, each section positioned flush with a respective end of a respective frame bar and being provided with a through-hole. The frame structure also comprises at least two bolts connecting a corner piece to at least two frame bars at a corner formed by the frame bars, each bolt being arranged through a respective through-hole of a respective section, perpendicularly to a plane of the section, in a longitudinal direction along a respective frame bar and into a respective hole of the respective frame bar, and fastened in a hole of a respective cross-dowel located in a respective seat.

Another aspect of the embodiments relates to a method for assembling a container or box comprising panels. The method comprises placing at least two frame bars at angles to each other to form at least one corner, each frame bar having a cross-sectional shape comprising at least one flange extending along a longitudinal edge of the frame bar, each of the flanges overlapping with a respective outer side surface of a panel. The method further comprises inserting at least one cross-dowel into a respective seat provided in an interior of a respective frame bar through a respective opening provided in the frame bar, each opening facing towards a side surface of the frame bar and leading to a seat, each cross-dowel having a cylindrical shape and being provided with a groove in at least one end and a hole in a lateral surface of the cross-dowel. The method also comprises aligning the hole in each of the cross-dowels with a respective hole provided in the respective frame bar, the hole in the frame bar facing towards an end of the frame bar. The method also comprises placing a respective section of at least one corner piece flush with a respective end of a respective frame bar, each corner piece comprising at least two sections being connected to or integral with each other and extending in planes that are angled to each other, each section being provided with a through-hole. The method also comprises attaching each corner piece to at least two frame bars at the corners formed by the frame bars by means of at least two bolts, each bolt being inserted through a respective through-hole in a respective section of the corner piece perpendicularly to a plane of the section, in a longitudinal direction along a respective frame bar and into a respective hole of the respective frame bar, and fastened into a hole of a respective cross-dowel located in a respective seat.

Some advantages of the proposed technology are:
- Faster and easier assembly of containers comprising wall panels.
- Greater tolerance for inaccuracies in the shape and size of the containers' wall panels.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
Fig. 1 is a schematic diagram illustrating a corner of a container with a frame structure according to an example embodiment of the invention.
Fig. 2 is a schematic diagram illustrating a corner of a container with a frame structure according to an example embodiment of the invention, a cover piece being removed from the corner.
Fig. 3 is a schematic diagram illustrating a corner of a container showing parts of a frame structure according to an example embodiment of the invention.
Fig. 4 is a schematic diagram illustrating a corner of a container showing parts of a frame structure according to an example embodiment of the invention.
Fig. 5 is a schematic diagram illustrating a corner of a container showing parts of a frame structure according to an example embodiment of the invention.
Fig. 6 is a schematic diagram illustrating a cross-dowel and an end view of a frame bar/profile of a container frame structure according to an example embodiment of the invention.
Fig. 7 is a schematic diagram illustrating a cross-dowel and an end view of a frame bar/profile of a container frame structure according to an example embodiment of the invention, the cross-dowel being inserted into the frame bar/profile.
Fig. 8 is a schematic diagram illustrating a detail of a cross-dowel and a frame bar/profile of a container frame structure according to an example embodiment of the invention.
Fig. 9 is a schematic diagram illustrating a corner of a container showing parts of a frame structure according to another example embodiment of the invention.
Fig. 10 is a schematic diagram illustrating some examples of shapes of standard ULD containers according to IATA regulations.

### DETAILED DESCRIPTION

Throughout the drawings, the same reference designations are used for similar or corresponding elements.

Although the present invention is mainly described in the context of air cargo containers, it may also be applicable to other types of frame structures for use in the construction of other containers as well as other similar objects, partly or completely enclosed, such as cabinets, racks and boxes, furniture, greenhouses, emergency shelters, truck cabinets etc., said structures being of the kind comprising separate frame bars/profiles where panels, such as wall panels and/or floor panels and/or roof panels, may be attached to the bars/profiles to complete the enclosure. When constructing a container or box the frame structure may for example comprise, at the top and bottom, horizontal bars/profiles at right-angles to one another connected to vertical bars/profiles at the corners of the container, thus comprising twelve bars/profiles forming a cuboid shape with eight corners. However, the containers or boxes may also have other shapes with more than eight corners and comprise more than twelve bars/profiles connected to each other at different angles, such as the examples of ULD containers illustrated in Fig. 10. Other shapes may of course also be possible. In prior art containers/boxes of this type, the panels are usually attached to the bars/profiles by means of e.g. a large number of screws, bolts and nuts, or rivets or similar along the entire length of the bars/profiles. Although a very rigid structure is obtained, the drilling of the necessary holes in the bars and fitting of the screws or the like requires a large amount of time and labor. The present invention tries to obviate this disadvantage by providing a frame structure that makes it easier and quicker to assemble such containers.

In e.g. the patent GB826200 (A) the frame bars are connected together at the corners of the structure by means of three-armed corner pieces, the arms of which extend in the directions of the respective bars. The bars are connected to the corner pieces by means of a number of screws, bolts and nuts or rivets at each end of the bars, the screws or the like being passed through the arms of the corner pieces and through a portion of the bars, in a transverse direction in relation to the bars.

A general frame structure comprises frame bars positioned at angles to each other to form corners, each frame bar having a cross-sectional shape comprising at least one flange extending along a longitudinal edge of the frame bar. In an embodiment a frame bar may have flanges located at opposite longitudinal edges of the frame bar and extending in planes that are angled to each other. The framework structure further comprises cross-dowels arranged in a respective seat provided in an interior of a respective frame bar, where at least one opening is provided in the frame bar and facing towards a side surface of the frame bar and leading to a respective seat. Each cross-dowel has a cylindrical shape and is provided with a groove in at least one end and a hole in a lateral surface of the cross-dowel. In a particular embodiment the seats may be provided with a respective ridge adapted to fit inside a groove of a cross-dowel when the hole of the cross-dowel is aligned with a hole provided in the respective frame bar, where the hole in the frame bar is facing towards an end of the frame bar. The ridges are in an embodiment provided with at least one protrusion, where each protrusion is protruding from a side surface of the ridge and is adapted to touch a side surface of a groove of a cross-dowel when the ridge is fitted inside the groove. The framework structure further comprises at least one corner piece, where each corner piece comprises sections that are connected to or integral with each other and extend in planes that are angled to each other. Each section is positioned flush with a respective end of a respective frame bar and is provided with a through-hole. The frame structure also comprises bolts for connecting the corner pieces to the frame bars at the corners formed by the frame bars, where each bolt is arranged through a respective through-hole of a respective section, perpendicularly to a plane of the section, in a longitudinal direction along a respective frame bar and into a respective hole of the respective frame bar, and fastened in a hole of a respective cross-dowel located in a respective seat.

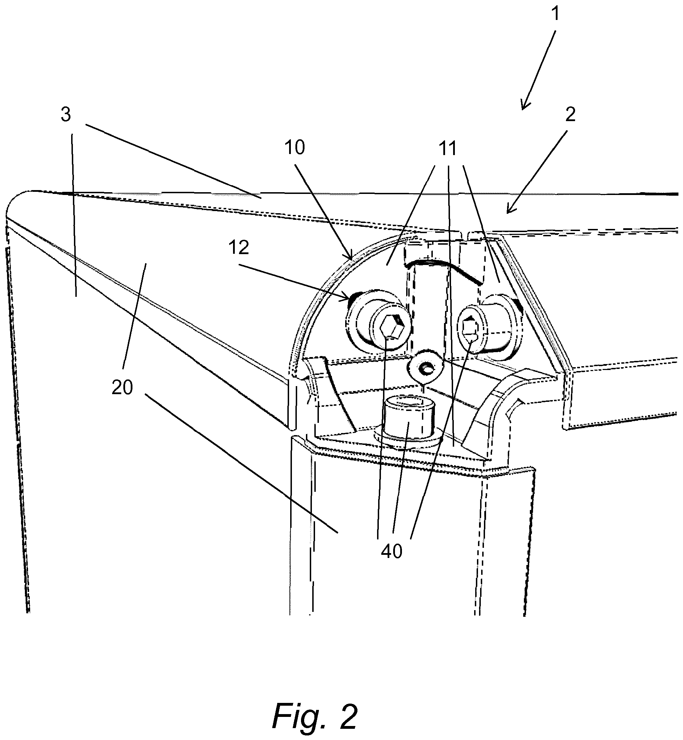

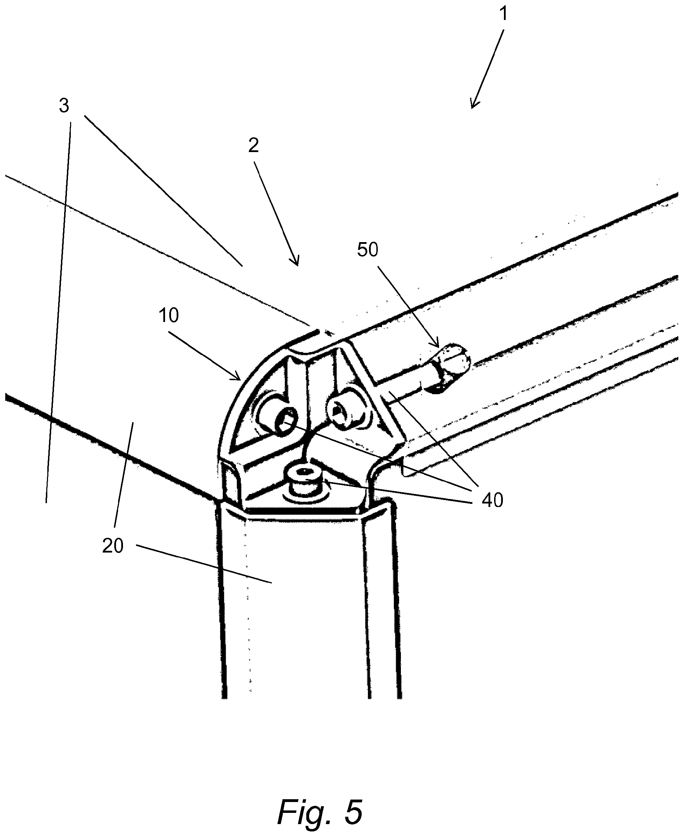

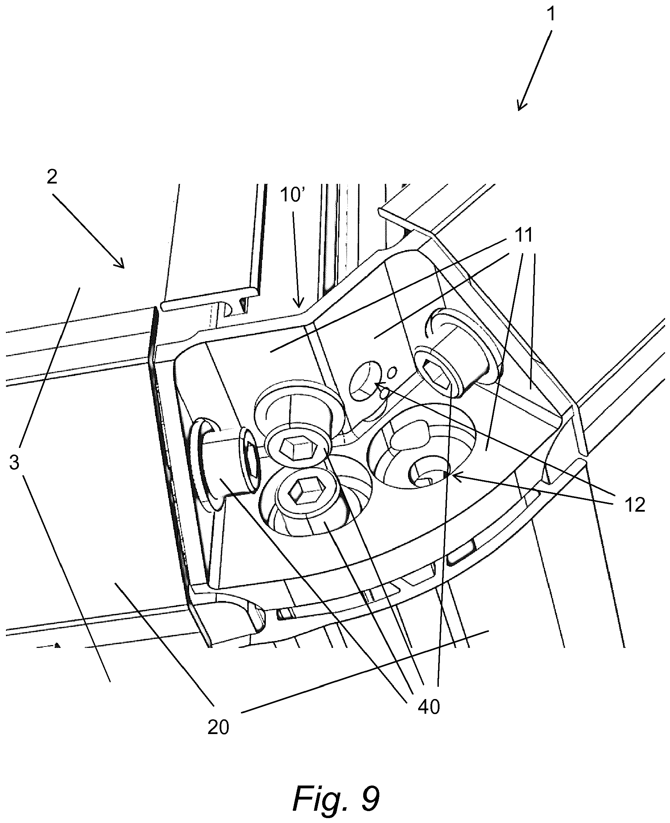

A frame structure according to an example embodiment of the present invention is illustrated in Fig. 2, where frame bars/profiles 20 of a frame structure 2 are placed at right-angles to each other to form corners, the frame bars being connected to each other at each corner of an assembled container 1 by means of a respective corner piece 10. As shown in Fig. 2, a corner piece 10 according to an embodiment covers the ends of three frame bars/profiles 20 at a corner of the assembled container 1 and is attached to the bars/profiles 20 by means of three bolts, screws, pins or the like 40, each bolt being inserted through a respective through-hole 12 in the corner piece 10 in a longitudinal/parallel direction along the respective bar/profile 20 and into a hole provided in the frame bar/profile 20, the hole facing the end of the frame bar. As shown in Fig. 5, the bolts 40 are then fastened in a respective cross-dowel or barrel nut 50 located in a respective seat formed in the bar/profile 20, as will be described in more detail below. In other embodiments, the frame bars/profiles may be positioned at other angles to each other to form corners. Also, there may be more than two frame bars/profiles connected to each other at a corner in some embodiments. In the top example of Fig. 10 there are two frame bars/profiles connected to each other at some of the corners, and three frame bars/profiles at other corners, whereas in the example embodiment illustrated in Fig. 9 there are four frame bars/profiles 20 connected to each other at a corner.

As illustrated in Fig. 2, the corner piece 10 may in an example embodiment comprise three sections 11 connected to or integral with each other and extending in planes at right-angles to each other, each section 11 being provided with a respective through-hole 12 adapted to enable insertion of a respective bolt 40 through the through-hole 12 in a perpendicular direction to the plane of the respective section 11. Assuming a container or box having, at the top and bottom, horizontal bars/profiles at right-angles to one another connected to vertical bars/profiles at the corners of the container by means of corner pieces according to an embodiment, two of the sections 11 of the corner piece extend in vertical planes at right-angles to each other and the third section 11 extends in a horizontal plane. In an embodiment, each section 11 may have a flat surface on the side facing away from the other sections 11, i.e. the side facing a respective end of a frame bar/profile, so that when a corner piece 10 is attached to the ends of three frame bars/profiles 20, which are placed at right-angles to each other, each vertical section 11 of the corner piece 10 is flush with the end of a respective horizontal bar/profile 20 and the horizontal section 11 is flush with the end of a vertical bar/profile 20. The surface of each of the sections 11 should preferably have a shape which is adapted to the cross-sectional shape of the respective frame bar/profile it is to be attached to, such that the edges of the corner piece are flush with the frame bars/profiles when the corner piece is attached to the frame bars/profiles. In an embodiment, the surface of one or more of the three sections 11 may have a shape where two sides are straight and perpendicular to each other and a third side connecting the two perpendicular sides may be straight or curved. The corner pieces may be made of e.g. aluminum or composite material in different embodiments.

Fig. 9 shows an example of a corner piece 10' according to another example embodiment. The corner piece 10' of this embodiment comprises five sections 11 connected to or integral with each other and extending in planes that are angled to each other, each section 11 being provided with a respective through-hole 12 adapted to enable insertion of a respective bolt 40 through the through-hole 12 in a perpendicular direction to the plane of the respective section 11. As illustrated in Fig. 9, the sections 11 of a corner piece may in some embodiments extend in planes at other angles to each other than right-angles, depending on e.g. the number of frame bars that are to be connected at the corner and the shape of the assembled container. For example, the corner piece 10' in Fig. 9 comprises two sections 11 extending in planes at an angle of 135° to each other. However, it should be noted that the corner pieces illustrated in Figs. 2 and 9 are only two examples of corner pieces and many other variants may of course also be possible. In some embodiments a corner piece may comprise more than five sections 11 and the angle between the planes of the sections 11 could also be less than 90° in some embodiments.

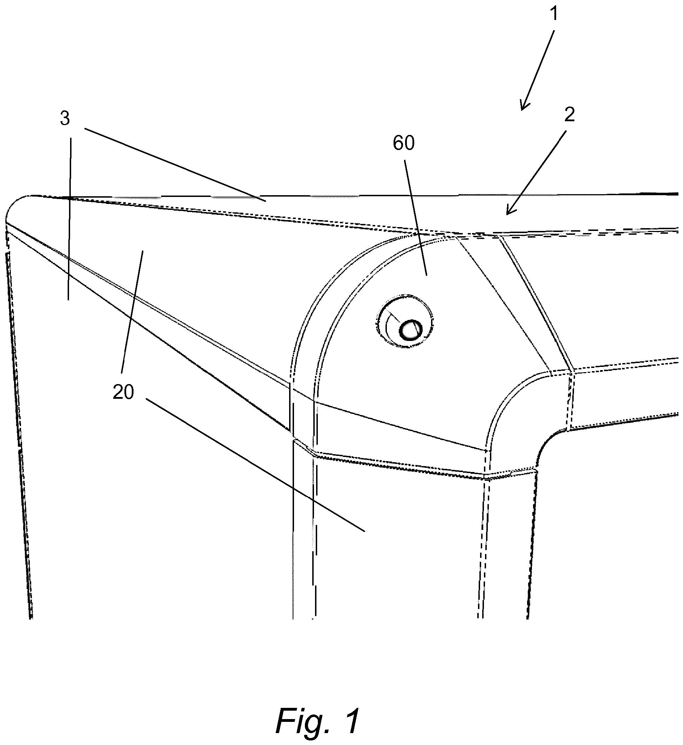

Fig. 1 illustrates a corner of a container with a frame structure 2 according to the embodiment of Fig. 2. As illustrated in Fig. 1, the corner piece and bolts may be covered by a cover piece 60, to protect the bolts and provide the corner with a smoother shape. In one embodiment the cover piece may be attached to the corner piece by a screw or similar, or by some other suitable attachment means. For example, in one embodiment the corner piece and cover piece may have matching means for snap-on attachment. The cover piece 60 may be made from the same material as the corner piece in an embodiment, or from another suitable material in another embodiment.

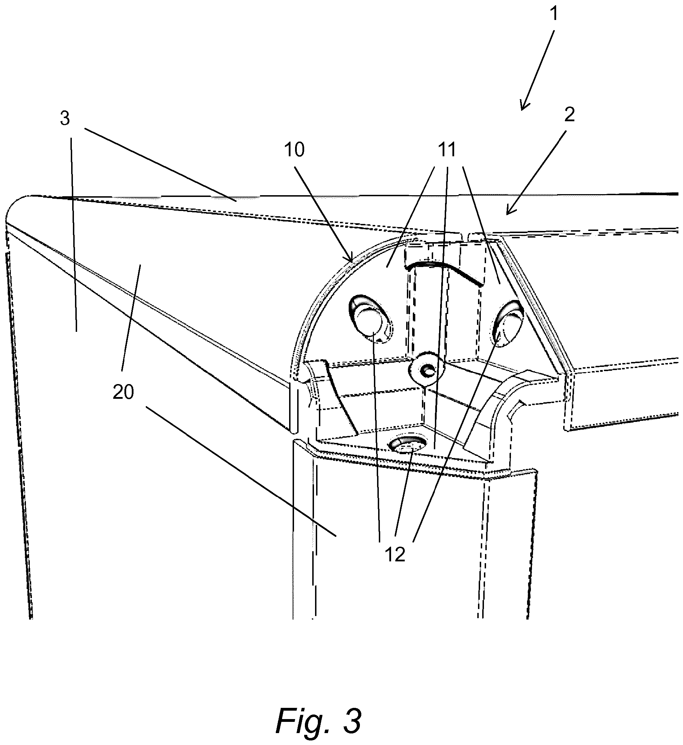

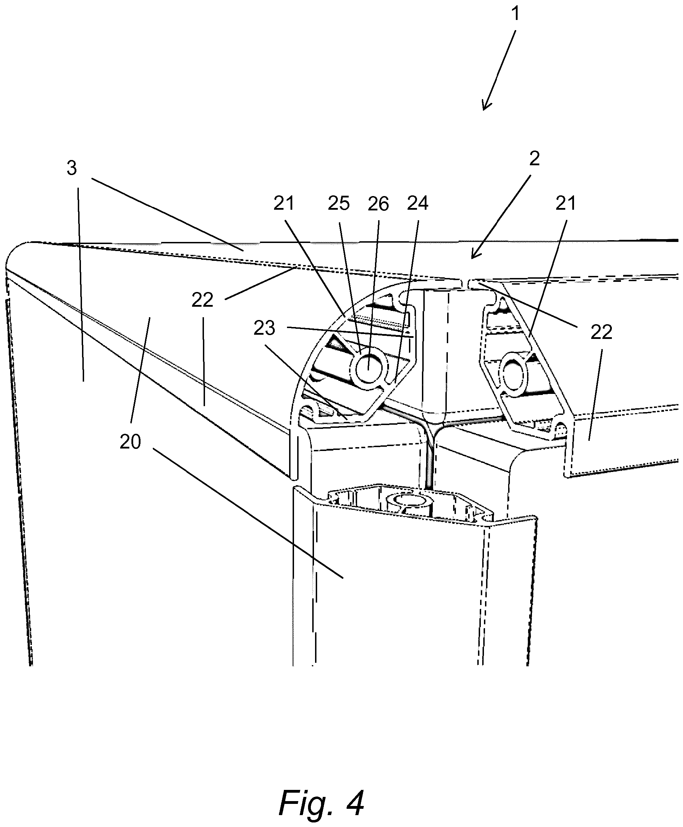

Fig. 3 illustrates a corner of a container 1 with a frame structure 2 according to the embodiment of Figs. 1 and 2, where the bolts have been removed. The through-holes 12 in the sections 11 of the corner piece 10 are more clearly visible in Fig. 3. Fig. 4 illustrates a corner of a container 1 with a frame structure 2 according to the embodiment of Figs. 1-3, where also the corner piece has been removed, showing the ends of the frame bars/profiles 20 of the container 1. Also shown in Figs. 1-4 are parts of the panels 3 that constitute two of the walls and the roof of the container. In an embodiment each panel may have the shape of a rectangular box or cuboid with two side surfaces and four end surfaces, each end surface having an elongated rectangular shape and an area which is much smaller than the area of a side surface. In other embodiments, one or more surfaces of one or more panels may have some other shape, such as a triangle or other polygon. When the container/box is assembled the side surfaces are facing the exterior and interior of the container/box, respectively, and one or more of the end surfaces may be facing a respective frame bar/profile in an embodiment. As described above, in the case of a ULD container, the panels may in some embodiments be made of composite material such as glass fiber, polyurethane, polycarbonate and/or other similar materials. Of course, other types of containers may have panels made of other types of suitable materials.

As illustrated in Fig. 4 a frame bar/profile 20 may in an embodiment have a cross-sectional shape such as to form a flat or transversely curved outer central part 21 with flanges 22 extending along the longitudinal edges of the frame bar 20, the flanges 22 being located at opposite edges of the frame bar 20 and extending in planes that are angled to each other. In one embodiment, the flanges 22 are extending in planes at right-angles to each other. In some embodiments, the flanges 22 may extend in planes at other angles to each other than right-angles, depending on e.g. the shape of the assembled container. An example embodiment is illustrated in Fig. 9. In some embodiments, there may be only one flange extending along one of the longitudinal edges of some of the frame bars, for example at a door opening where a flange would restrict the movement of the door. In a particular embodiment, the flanges 22 are flat. The outer central part 21 forms an outer edge of the assembled container/box 1 and the flanges 22 are adapted to overlap with the outer side surfaces of the panels 3 of the container 1 when the container 1 is assembled. In prior art containers, the panels would be attached to the frame bars/profiles by fitting a large number of screws or the like through the flanges and into the panels in a transverse direction to the panels, as mentioned above. However, according to an embodiment of the present invention it will not be necessary to attach the panels to the flanges; instead the container is held together by means of the corner pieces which are covering the ends of the frame bars/profiles and held into place by bolts which are directed in a longitudinal direction along the frame bars and fastened in cross-dowels/barrel nuts inserted into the frame bars/profiles, as will be described in more detail below. The overlap between the flanges and the panels is enough to keep the panels in place.

As also can be seen in Fig. 4 a frame bar/profile 20 may in an embodiment have a cross-sectional shape such as to form two side parts 23 extending in planes that are angled to each other. In a particular embodiment the side parts 23 are extending in planes at right-angles to each other. In some embodiments the side parts 23 may extend in planes at other angles to each other than right-angles, depending on e.g. the shape of the assembled container. The side parts 23 are adapted to be flush with the end surfaces of the panels 3 of the container 1 when the container is assembled. In an embodiment, the side parts 23 are flat. The cross-sectional shape of a frame bar/profile may in an embodiment also form an inner part 24 which connects the two side parts 23, as shown in Fig. 4. In a particular embodiment the outer central part 21 and the inner part 24 are flat and substantially parallel to each other. As shown in Fig. 4 the cross-sectional shape of a frame bar/profile 20 may in an embodiment also form an interior part 25 which is located in-between the outer central part 21, the inner part 24 and the side parts 23 and which provides a hole 26 facing towards the end of the frame bar/profile 20. The hole 26 is adapted to enable insertion of a bolt from the end of the frame bar/profile 20 in a longitudinal/parallel direction along the frame bar/profile 20. In an embodiment, at least one hole 26 is provided at each end of the frame bar/profile 20.

As described above, a corner piece is held into place by bolts which are directed in a longitudinal/parallel direction along the frame bars/profiles and fastened in cross-dowels inserted into seats formed in the frame bars/profiles. Thus, when a bolt is tightened, the corner piece will be securely fixed against the end of the respective bar/profile. Fig. 5 illustrates the position of a cross-dowel 50 according to an embodiment of a frame structure 2. One of the frame bars/profiles 20 is drawn as transparent in Fig. 5 to show the bolt 40 and the cross-dowel 50 inside the profile. The bolts 40 and the cross-dowels 50 may be provided with matching threads in an embodiment, so that the bolts may be screwed into the cross-dowels.

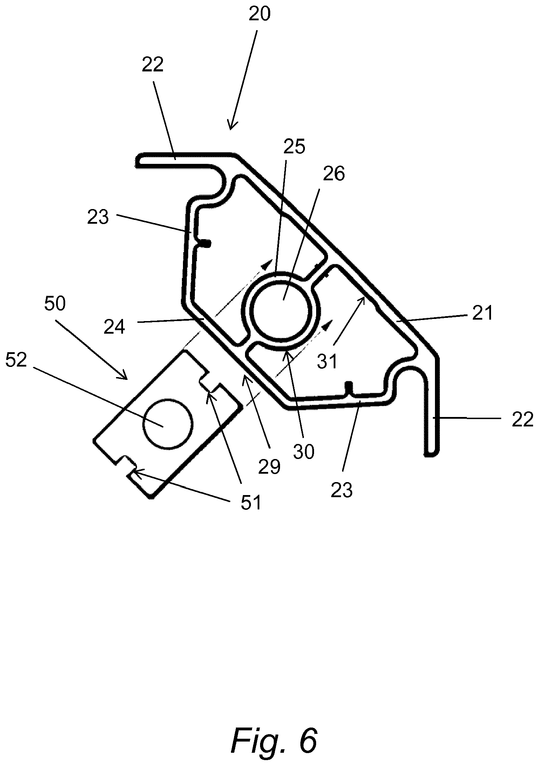

As illustrated in Fig. 6, the interior part 25 of the frame bar/profile 20 may also form at least one seat 30 located in the interior of the frame bar/profile 20, the seat 30 being adapted to support a cross-dowel or barrel nut 50 inside the frame bar/profile 20. In an embodiment, such a seat 30 is located near the end of a frame bar/profile 20 at a distance from the end such that a bolt 40 can be inserted into the hole 26 from the end of the bar/profile 20 and fastened in a cross-dowel 50 located in the seat 30 in the frame bar/profile 20, i.e. the distance from the end to the seat 30 is shorter than the length of the bolts 40. In an embodiment at least one seat 30 is provided near each end of a frame bar/profile. To enable insertion of the cross-dowel into the seat 30, at least one opening 29 is provided in the frame bar/profile 20, the opening 29 facing towards a side surface of the frame bar 20 and leading to the seat 30. The cross-dowel 50 may be inserted from the outer side of the frame bar 20, i.e. the opening 29 may be provided in the outer central part 21 of the frame bar 20 in an embodiment, but in a preferred embodiment the cross-dowel 50 is inserted from the inner side of the frame bar 20, i.e. at least one opening 29 is provided in the inner part 24 of the frame bar 20. In the latter case, the opening 29 will not be visible from the outside of the container 1 when the container is assembled. The cross-dowel 50 is inserted into the seat 30 in a substantially transverse/perpendicular direction to the frame bar 20 in an embodiment.

According to an embodiment, and as illustrated in Fig. 6, a cross-dowel or barrel nut 50 has a basically cylindrical shape and may be provided with a groove 51 at each end, i.e. at each base surface of the cylinder. In another embodiment the cross-dowel 50 is provided with a groove 51 at only one of the ends. The cross-dowel 50 is also provided with a hole 52 in its lateral surface for receiving and fastening a bolt. The hole 52 may be threaded in an embodiment so that a bolt with a matching thread can be screwed into the hole. In an embodiment, the hole 52 is a through-hole. In such a case, the end of a bolt may be passed through the hole 52 and in one embodiment

the bolt may be fastened by screwing it into a nut located at the side of the hole where the end of the bolt exits. Fig. 6 also shows and end view of a frame bar/profile 20 according to an embodiment, illustrating the previously described outer central part 21, flanges 22, side parts 23, inner part 24, interior part 25 and hole 26. The arrows illustrate the direction in which the cross-dowel 50 is inserted into the opening 29 in the bar/profile 20 in an embodiment, i.e. from the inner side of the bar/profile 20, through the inner part 24. As described above, the cross-dowel 50 may be inserted from the outer side of the bar/profile 20 in another embodiment.

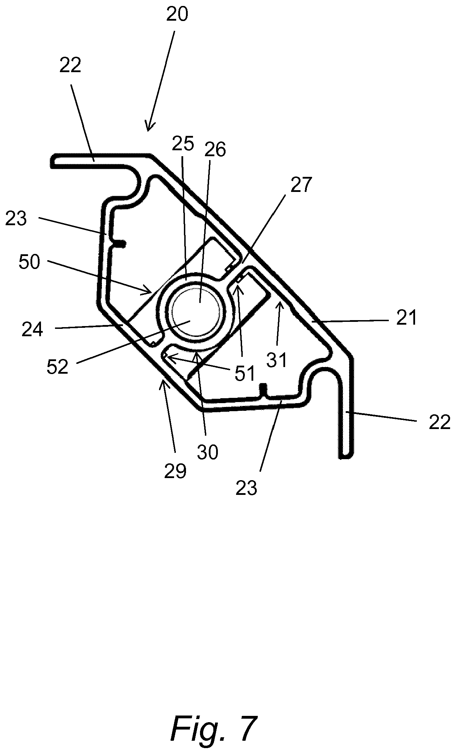

Fig. 7 shows the cross-dowel 50 and the end view of the frame bar/profile 20 when the cross-dowel 50 has been inserted into the seat 30 through the opening 29 in the bar/profile. In order to receive a bolt into the hole 52 in the cross-dowel 50, the cross-dowel 50 must be properly aligned, i.e. the sides of the hole 52 should be parallel to the bar/profile 20 and the hole 52 should be aligned with the hole 26 in the interior part 25 of the bar/profile 20, as shown in Fig. 7. To facilitate the alignment of the cross-dowel 50, the seat 30 in the bar/profile 20 may be provided with a ridge 27 or other elongated protrusion which is adapted to fit inside an end groove 51 of the cross-dowel 50 in an embodiment. The ridge 27 is located at the end of the seat 30 opposite to the opening 29 in the bar/profile 20 in an embodiment. The hole 52 in the cross-dowel 50 is positioned such that the hole 52 is properly aligned when the ridge 27 is fitted into an end groove 51. If the cross-dowel is provided with a groove at both ends, it may be aligned by inserting a slot screwdriver or similar into the outer end groove of the cross-dowel turn the cross-dowel until the inner end groove is fitted with the ridge. In an embodiment the cross-dowel has a groove at both ends and the hole 52 is positioned at equal distance from both ends, and thus it will be irrelevant which end of the cross-dowel that goes in first when a cross-dowel is inserted into the opening 29 in the frame bar/profile.

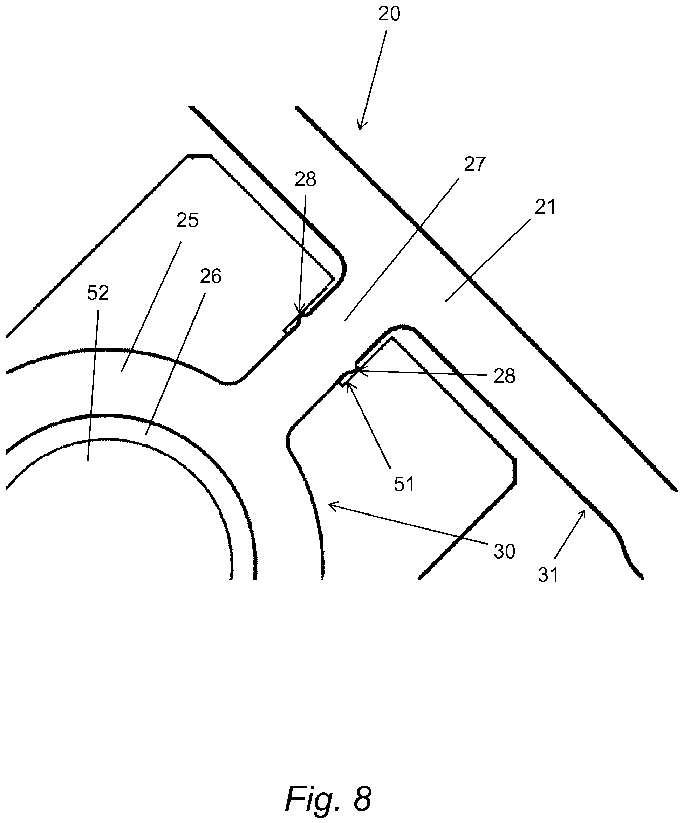

Fig. 8 is an enlarged view showing a part of a cross-dowel 50 and a frame bar/profile 20 according to an embodiment. As seen in Fig. 8, and also in Figs. 6-7, the ridge 27 may in this embodiment be provided with at least one protrusion or barb 28, each protrusion/barb 28 protruding from a side surface of the ridge 27 and being adapted to touch a side surface of an end groove 51 of the cross-dowel 50 when the ridge 27 is fitted inside the groove 51. Thus, the friction between the protrusions/barbs 28 and the side surfaces of the end groove 51 of the cross-dowel 50 prevents the cross-dowel from accidentally falling out of the frame bar/profile 20 while assembling the container. Still, a cross-dowel can be removed from the frame bar/profile when required e.g. by tapping gently on the bar/profile, or with the aid of a magnet or a tool such as a slot screwdriver. For this purpose, the frame bar/profile may be provided with a recess 31, as shown in Figs. 6, 7 and 8, to facilitate insertion of e.g. a slot screwdriver from the end of the frame bar/profile between the cross-dowel and the bar/profile. The above described protrusions/barbs are thus very helpful when assembling the container, since the barbs will hold the cross-dowels in place while the bars/profiles are handled. This is particularly useful when the openings leading to the seats in the frame bars/profiles are facing the inner side surfaces of the frame bars/profiles, since in that case the cross-dowels have to be inserted into the frame bars/profiles before the bars/profiles are placed on the panels and connected to each other by means of the corner piece.

The frame structure according to the described embodiments makes assembling and disassembling of a container or box with panels very quick and easy since only 24 bolts are needed and they are very easy to insert and fasten. Also, there is greater tolerance for inaccuracies in the shape and size of the panels.

Some advantages of the proposed technology are:
- Faster and easier assembly of containers.
- Greater tolerance for inaccuracies in the shape and size of the containers' wall, roof and/or floor panels.

## Claims

1. A frame structure (2) for a container or box (1), said container or box comprising panels (3), the frame structure (2) comprising:
at least two frame bars (20) positioned at angles to each other to form at least one corner, each frame bar (20) having a cross-sectional shape comprising at least one flange (22) extending along a longitudinal edge of the frame bar (20),
at least two cross-dowels (50) arranged in a respective seat (30) provided in an interior of a respective frame bar (20), at least one opening (29) being provided in the frame bar (20) and facing towards a side surface of the frame bar (20) and leading to a respective seat (30), each cross-dowel (50) having a cylindrical shape and being provided with a groove (51) in at least one end and a hole (52) in a lateral surface of the cross-dowel (50), the hole (52) of the cross-dowel (50) being aligned with a hole (26) provided in the respective frame bar (20), the hole (26) in the frame bar (20) facing towards an end of the frame bar (20)
at least one corner piece (10, 10'), each corner piece (10, 10') comprising at least two sections (11) being connected to or integral with each other and extending in planes that are angled to each other, each section (11) positioned flush with a respective end of a respective frame bar (20) and being provided with a through-hole (12); and
at least two bolts (40) connecting a corner piece (10, 10') to at least two frame bars (20) at a corner formed by the frame bars, each bolt (40) being arranged through a respective through-hole (12) of a respective section (11), perpendicularly to a plane of the section (11), in a longitudinal direction along a respective frame bar (20) and into a respective hole (26) of the respective frame bar (20), and fastened in a hole (52) of a respective cross-dowel (50) located in a respective seat (30).

2. The frame structure (2) of claim 1, wherein at least one frame bar (20) has flanges (22) located at opposite longitudinal edges of the frame bar (20) and extending in planes that are angled to each other.

3. The frame structure (2) of claim 1 or 2, wherein each seat (30) is provided with a respective ridge (27) adapted to fit inside a groove (51) of a cross-dowel (50) when the hole (52) of the cross-dowel (50) is aligned with a hole (26) provided in the respective frame bar (20), each ridge (27) being provided with at least one protrusion (28), each protrusion (28) protruding from a side surface of the ridge (27) and being adapted to touch a side surface of the groove (51) of the cross-dowel (50) when the ridge (27) is fitted inside the groove (51).

4. The frame structure (2) of any preceding claim, wherein at least one section (11) of at least one corner piece (10, 10') has a flat surface on a side facing a frame bar (20).

5. The frame structure (2) of any preceding claim, wherein a surface of at least one section (11) of at least one corner piece (10, 10') has a shape which is adapted to a cross-sectional shape of the respective frame bar (20) it is connected to.

6. The frame structure (2) of any preceding claim, wherein said at least one corner piece (10, 10') is made of aluminum or composite material.

7. The frame structure (2) of any preceding claim, wherein at least one frame bar (20) is provided with at least two holes (26), each hole (26) facing towards a respective end of the frame bar (20), at least two seats (30) located in the interior of the frame bar (20) and at least two openings (29) facing towards a side surface of the frame bar (20) and leading to a respective seat (30).

8. The frame structure (2) of any preceding claim, wherein at least one opening (29) of a frame bar (20) is facing towards a side surface of the frame bar (20) being adapted to face an inside of the container or box (1) when the container or box (1) is assembled.

9. The frame structure (2) of any of the claims 3 to 8, wherein the ridge (27) of at least one seat (30) is located at an end of the seat (30) opposite to the opening (29) of the respective frame bar (20).

10. The frame structure (2) of any preceding claim, wherein the hole (52) of at least one cross-dowel (50) is threaded.

11. Method for assembling a container or box (1) comprising panels (3), the method comprising:
placing at least two frame bars (20) at angles to each other to form at least one corner, each frame bar (20) having a cross-sectional shape comprising at least one flange (22) extending along a longitudinal edge of the frame bar (20), each of the flanges (22) overlapping with a respective outer side surface of a panel (3);
inserting at least one cross-dowel (50) into a respective seat (30) provided in an interior of a respective frame bar (20) through a respective opening (29) provided in the frame bar (20), each opening (29) facing towards a side surface of the frame bar (20) and leading to a seat (30), each cross-dowel (50) having a cylindrical shape and being provided with a groove (51) in at least one end and a hole (52) in a lateral surface of the cross-dowel (50);
aligning the hole (52) of each of the cross-dowels (50) with a respective hole (26) provided in the respective frame bar (20), the hole (26) in the frame bar (20) facing towards an end of the frame bar (20);
placing a respective section (11) of at least one corner piece (10, 10') flush with a respective end of a respective frame bar (20), each corner piece (10, 10') comprising at least two sections (11) being connected to or integral with each other and extending in planes that are angled to each other, each section (11) being provided with a through-hole (12); and
attaching each corner piece (10, 10') to at least two frame bars (20) at the corners formed by the frame bars (20) by means of at least two bolts (40), each bolt (40) being inserted through a respective through-hole (12) in a respective section (11) of the corner piece (10, 10') perpendicularly to a plane of the section (11), in a longitudinal direction along a respective frame bar (20) and into a respective hole (26) of the respective frame bar (20), and fastened into a hole (52) of a respective cross-dowel (50) located in a respective seat (30).

12. The method of claim 11, wherein the step of aligning the hole (52) of each of the cross-dowels (50) with a respective hole (26) provided in the respective frame bar (20) comprises turning the cross-dowel (50) until a ridge (27) provided in the respective seat (30) is fitted inside a groove (51) of the cross-dowel (50), the ridge (27) being provided with at least one protrusion (28), each protrusion (28) protruding from a side surface of the ridge (27) and being adapted to touch a side surface of the groove (51) of the cross-dowel (50) when the ridge (27) is fitted inside the groove (51).
